# EUROPEAN PATENT SPECIFICATION

(11) **EP 3 912 331 B1**
(45) Date of publication and mention of the grant of the patent: **09.08.2023**
(21) Application number: 20707886.6
(22) Date of filing: 17.01.2020
(51) Int. Cl.: H04L 67/1097

(54) **CLOUD INFRASTRUCTURE SERVICE AND MAINTENANCE**
CLOUD-INFRASTRUKTURDIENST UND WARTUNG
SERVICE ET MAINTENANCE D'INFRASTRUCTURE EN NUAGE

(30) Priority: 18.01.2019 US 201916251888
(43) Date of publication of application: 24.11.2021
(73) Proprietor: ServiceNow, Inc., Santa Clara, California 95054 (US)
(72) Inventor: SAINI, Atul, Santa Clara, California 95054 (US); YE, Xiaoyi, Santa Clara, California 95054 (US); MEIYAPPAN, Sethuraman, Santa Clara, California 95054 (US); NARAYANAN, Magesh, Santa Clara, California 95054 (US); JOHN, Cody Stephen, Santa Clara, California 95054 (US); YU, Xuri, Santa Clara, California 95054 (US); XIANG, Yang, Santa Clara, California 95054 (US); VAGADURGI, Manjunath Gurubasappa, Santa Clara, California 95054 (US)
(74) Representative: EIP
(86) International application number: PCT/US2020/014120
(87) International publication number: WO 2020/150621

(56) References cited:
- US-A1- 2008 162 491

## Description

### BACKGROUND

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Organizations, regardless of size, rely upon access to information technology (IT) and data and services for their continued operation and success. A respective organization's IT infrastructure may have associated hardware resources (e.g. computing devices, load balancers, firewalls, switches, etc.) and software resources (e.g. productivity software, database applications, custom applications, and so forth). Over time, more and more organizations have turned to cloud computing approaches to supplement or enhance their IT infrastructure solutions.

Cloud computing relates to the sharing of computing resources that are generally accessed via the Internet. In particular, a cloud computing infrastructure allows users, such as individuals and/or enterprises, to access a shared pool of computing resources, such as servers, storage devices, networks, applications, and/or other computing based services. By doing so, users are able to access computing resources on demand that are located at remote locations, which resources may be used to perform a variety of computing functions (e.g., storing and/or processing large quantities of computing data). For enterprise and other organization users, cloud computing provides flexibility in accessing cloud computing resources without accruing large up-front costs, such as purchasing expensive network equipment or investing large amounts of time in establishing a private network infrastructure. Instead, by utilizing cloud computing resources, users are able to redirect their resources to focus on their enterprise's core functions.

One consequence of the growing prevalence of cloud computing solutions is the need to facilitate both client-driven and infrastructure-driven changes or updates to the cloud-environment as client needs changes and/or as capacity or bandwidth limitations are reached. Such infrastructure or client-driven changes may be difficult to implement in practice in a complex infrastructure.
US 2008/162491 A1 is directed to systems and methods for cloning a tenant database and sending updates to the clone, in so doing a difference between the clone and the tenant may be determined, making it possible to test upgrades for a tenant based on the difference.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In one aspect, the present approach provides functionality to allow a customer to rename a client instance utilized by the customer without having to provision a new instance. In such an implementation, data may be kept or maintained within the renamed instance. In one such approach, new nodes having the new name are added to an existing instance. The existing database is backed up and new nodes are added to the pool under the original name. The existing database, database catalog, and tables are renamed to the new name. A new domain name system (DNS) entry is configured and, if needed, a new e-mail account is set up under the new name. System properties may also be updated to reflect the new name. Lastly, a job may be scheduled and run to remove or archive the original nodes and DNS. As may be appreciated, such an approach may be useful in the context of name change of an entity or organization that utilizes the instance.

While the preceding is a change that may be performed based on a customer need, in addition, it may be desirable in some circumstances to perform changes or updates based on an infrastructure-based need. For example, in some circumstances, virtual IP (VIP) addresses may be employed as part of a cloud implementation. Based on load or other considerations it may be useful to migrate the VIP addresses and the instances using the VIP addresses in parallel. For example, such a migration may be justified based on load or load balancing considerations.

In accordance with examples of the approach, multiple VIPs and the instances using the VIPs may be migrated at one time and without downtime to the customer. Further, in accordance with this approach, each VIP migration is independent and does not impact other customers not involved in the migration. Further, for all instances using the same VIP, if a migration step is failed, changes to instances, pools, and pool members using the VIP may be automatically rolled back. The following disclosure relates aspects of these approaches in greater detail.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

Various aspects of this disclosure may be better understood upon reading the following detailed description and upon reference to the drawings in which:
FIG. 1 is a block diagram of an embodiment of a cloud architecture in which embodiments of the present disclosure may operate;
FIG. 2 is a schematic diagram of an embodiment of a multi-instance cloud architecture in which embodiments of the present disclosure may operate;
FIG. 3 is a block diagram of a computing device utilized in a computing system that may be present in FIGS. 1 or 2, in accordance with aspects of the present disclosure;
FIG. 4 is a block diagram illustrating an embodiment in which a virtual server supports and enables the client instance, in accordance with aspects of the present disclosure;
FIG. 5 depicts a conventional approach to renaming an instance;
FIG. 6 depicts renaming an instance, in accordance with aspects of the present approach;
FIG. 7 depicts steps in migrating a virtual internet protocol (VIP) address, in accordance with aspects of the present approach; and
FIG. 8 depicts further aspects of migrating a VIP address, in accordance with aspects of the present approach.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and enterprise-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

As used herein, the term "computing system" refers to an electronic computing device such as, but not limited to, a single computer, virtual machine, virtual container, host, server, laptop, and/or mobile device, or to a plurality of electronic computing devices working together to perform the function described as being performed on or by the computing system. As used herein, the term "medium" refers to one or more non-transitory, computer-readable physical media that together store the contents described as being stored thereon. Embodiments may include nonvolatile secondary storage, read-only memory (ROM), and/or random-access memory

(RAM). As used herein, the term "application" refers to one or more computing modules, programs, processes, workloads, threads and/or a set of computing instructions executed by a computing system. Example embodiments of an application include software modules, software objects, software instances and/or other types of executable code.

As discussed herein various techniques and services that may be useful in support of a customer's use of resources on a cloud-based infrastructure are described. In accordance with these approaches, various functionalities such as in-place renaming of a client instance and/or migration of virtual IP (VIP addresses) are described. As may be appreciated, certain of these functionalities may be performed in response to a client request or instruction, such as in response to an acquisition or name change, while others may be performed in response to infrastructure or administrative issues, such as issues related to load balancing or network utilization. With this in mind, various techniques as discussed herein may be performed separately or together to accommodate customer and/or infrastructure needs.

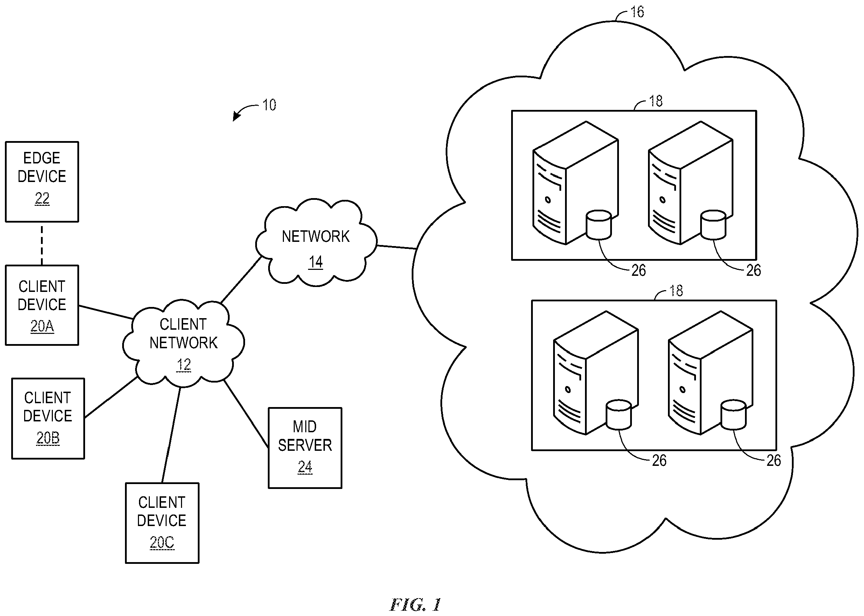

With the preceding in mind, the following figures relate to various types of generalized system architectures or configurations that may be employed to provide services to an organization in a multi-instance framework and on which the present approaches may be employed. Correspondingly, these system and platform examples may also relate to systems and platforms on which the techniques discussed herein may be implemented or otherwise utilized. Turning now to FIG. 1, a schematic diagram of an embodiment of a cloud computing system 10 where embodiments of the present disclosure may operate, is illustrated. The cloud computing system 10 may include a client network 12, a network 14 (e.g., the Internet), and a cloud-based platform 16. In some implementations, the cloud-based platform 16 may be a configuration management database (CMDB) platform. In one embodiment, the client network 12 may be a local private network, such as local area network (LAN) having a variety of network devices that include, but are not limited to, switches, servers, and routers. In another embodiment, the client network 12 represents an enterprise network that could include one or more LANs, virtual networks, data centers 18, and/or other remote networks. As shown in FIG. 1, the client network 12 is able to connect to one or more client devices 20A, 20B, and 20C so that the client devices are able to communicate with each other and/or with the network hosting the platform 16. The client devices 20 may be computing systems and/or other types of computing devices generally referred to as Internet of Things (IoT) devices that access cloud computing services, for example, via a web browser application or via an edge device 22 that may act as a gateway between the client devices 20 and the platform 16. FIG. 1 also illustrates that the client network 12 includes an administration or managerial device or server, such as a management, instrumentation, and discovery (MID) server 24 that facilitates communication of data between the network hosting the platform 16, other external applications, data sources, and services, and the client network 12. Although not specifically illustrated in FIG. 1, the client network 12 may also include a connecting network device (e.g., a gateway or router) or a combination of devices that implement a customer firewall or intrusion protection system.

For the illustrated embodiment, FIG. 1 illustrates that client network 12 is coupled to a network 14. The network 14 may include one or more computing networks, such as other LANs, wide area networks (WAN), the Internet, and/or other remote networks, to transfer data between the client devices 20 and the network hosting the platform 16. Each of the computing networks within network 14 may contain wired and/or wireless programmable devices that operate in the electrical and/or optical domain. For example, network 14 may include wireless networks, such as cellular networks (e.g., Global System for Mobile Communications (GSM) based cellular network), IEEE 802.11 networks, and/or other suitable radio-based networks. The network 14 may also employ any number of network communication protocols, such as Transmission Control Protocol (TCP) and Internet Protocol (IP). Although not explicitly shown in FIG. 1, network 14 may include a variety of network devices, such as servers, routers, network switches, and/or other network hardware devices configured to transport data over the network 14.

In FIG. 1, the network hosting the platform 16 may be a remote network (e.g., a cloud network) that is able to communicate with the client devices 20 via the client network 12 and network 14. The network hosting the platform 16 provides additional computing resources to the client devices 20 and/or the client network 12. For example, by utilizing the network hosting the platform 16, users of the client devices 20 are able to build and execute applications for various enterprise, IT, and/or other organization-related functions. In one embodiment, the network hosting the platform 16 is implemented on the one or more data centers 18, where each data center could correspond to a different geographic location. Each of the data centers 18 includes a plurality of virtual servers 26 (also referred to herein as application nodes, application servers, virtual server instances, application instances, or application server instances), where each virtual server 26 can be implemented on a physical computing system, such as a single electronic computing device (e.g., a single physical hardware server) or across multiple-computing devices (e.g., multiple physical hardware servers). Examples of virtual servers 26 include, but are not limited to a web server (e.g., a unitary Apache installation), an application server (e.g., unitary JAVA Virtual Machine), and/or a database server (e.g., a unitary relational database management system (RDBMS) catalog).

To utilize computing resources within the platform 16, network operators may choose to configure the data centers 18 using a variety of computing infrastructures. In one embodiment, one or more of the data centers 18 are configured using a multi-tenant cloud architecture, such that one of the server instances 26 handles requests from and serves multiple customers. Data centers 18 with multi-tenant cloud architecture commingle and store data from multiple customers, where multiple customer instances are assigned to one of the virtual servers 26. In a multi-tenant cloud architecture, the particular virtual server 26 distinguishes between and segregates data and other information of the various customers. For example, a multi-tenant cloud architecture could assign a particular identifier for each customer in order to identify and segregate the data from each customer. Generally, implementing a multi-tenant cloud architecture may suffer from various drawbacks, such as a failure of a particular one of the server instances 26 causing outages for all customers allocated to the particular server instance.

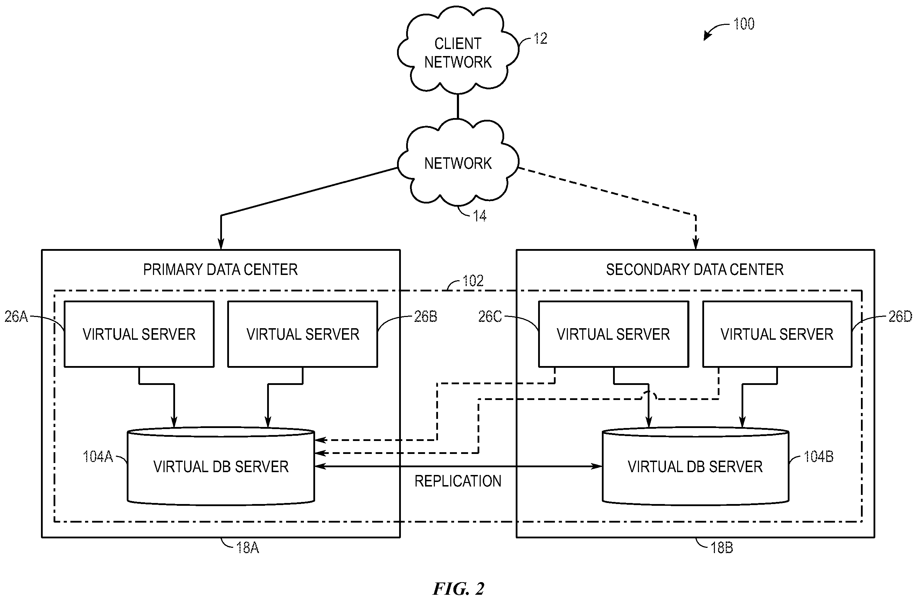

In another embodiment, one or more of the data centers 18 are configured using a multi-instance cloud architecture to provide every customer with its own unique customer instance or instances. For example, a multi-instance cloud architecture could provide each customer instance with its own dedicated application server and dedicated database server. In other examples, the multi-instance cloud architecture could deploy a single physical or virtual server 26 and/or other combinations of physical and/or virtual servers 26, such as one or more dedicated web servers, one or more dedicated application servers, and one or more database servers, for each customer instance. In a multi-instance cloud architecture, multiple customer instances could be installed on one or more respective hardware servers, where each customer instance is allocated certain portions of the physical server resources, such as computing memory, storage, and processing power. By doing so, each customer instance has its own unique software stack that provides the benefit of data isolation, relatively less downtime for customers to access the platform 16, and customer-driven upgrade schedules. An example of implementing a customer instance within a multi-instance cloud architecture will be discussed in more detail below with reference to FIG. 2.

FIG. 2 is a schematic diagram of an embodiment of a multi-instance cloud architecture 100 where embodiments of the present disclosure may operate. FIG. 2 illustrates that the multi-instance cloud architecture 100 includes the client network 12 and the network 14 that connect to two (e.g., paired) data centers 18A and 18B that may be geographically separated from one another. Using FIG. 2 as an example, network environment and service provider cloud infrastructure client instance 102 (also referred to herein as a client instance 102) is associated with (e.g., supported and enabled by) dedicated virtual servers (e.g., virtual servers 26A, 26B, 26C, and 26D) and dedicated database servers (e.g., virtual database servers 104A and 104B). Stated another way, the virtual servers 26A-26D and virtual database servers 104A and 104B are not shared with other client instances and are specific to the respective client instance 102. In the depicted example, to facilitate availability of the client instance 102, the virtual servers 26A-26D and virtual database servers 104A and 104B are allocated to two different data centers 18A and 18B so that one of the data centers 18 acts as a backup data center. Other embodiments of the multi-instance cloud architecture 100 could include other types of dedicated virtual servers, such as a web server. For example, the client instance 102 could be associated with (e.g., supported and enabled by) the dedicated virtual servers 26A-26D, dedicated virtual database servers 104A and 104B, and additional dedicated virtual web servers (not shown in FIG. 2).

Although FIGS. 1 and 2 illustrate specific embodiments of a cloud computing system 10 and a multi-instance cloud architecture 100, respectively, the disclosure is not limited to the specific embodiments illustrated in FIGS. 1 and 2. For instance, although FIG. 1 illustrates that the platform 16 is implemented using data centers, other embodiments of the platform 16 are not limited to data centers and can utilize other types of remote network infrastructures. Moreover, other embodiments of the present disclosure may combine one or more different virtual servers into a single virtual server or, conversely, perform operations attributed to a single virtual server using multiple virtual servers. For instance, using FIG. 2 as an example, the virtual servers 26A, 26B, 26C, 26D and virtual database servers 104A, 104B may be combined into a single virtual server. Moreover, the present approaches may be implemented in other architectures or configurations, including, but not limited to, multi-tenant architectures, generalized client/server implementations, and/or even on a single physical processor-based device configured to perform some or all of the operations discussed herein. Similarly, though virtual servers or machines may be referenced to facilitate discussion of an implementation, physical servers may instead be employed as appropriate. The use and discussion of FIGS. 1 and 2 are only examples to facilitate ease of description and explanation and are not intended to limit the disclosure to the specific examples illustrated therein.

As may be appreciated, the respective architectures and frameworks discussed with respect to FIGS. 1 and 2 incorporate computing systems of various types (e.g., servers, workstations, client devices, laptops, tablet computers, cellular telephones, and so forth) throughout. For the sake of completeness, a brief, high-level overview of components typically found in such systems is provided. As may be appreciated, the present overview is intended to merely provide a high-level, generalized view of components typical in such computing systems and should not be viewed as limiting in terms of components discussed or omitted from discussion.

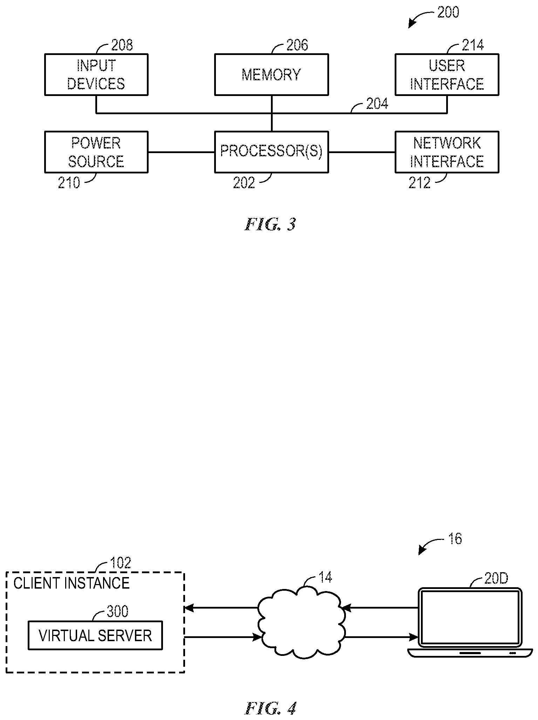

By way of background, it may be appreciated that the present approach may be implemented using one or more processor-based systems such as shown in FIG. 3. Likewise, applications and/or databases utilized in the present approach may be stored, employed, and/or maintained on such processor-based systems. As may be appreciated, such systems as shown in FIG. 3 may be present in a distributed computing environment, a networked environment, or other multi-computer platform or architecture. Likewise, systems such as that shown in FIG. 3, may be used in supporting or communicating with one or more virtual environments or computational instances on which the present approach may be implemented.

With this in mind, an example computer system may include some or all of the computer components depicted in FIG. 3. FIG. 3 generally illustrates a block diagram of example components of a computing system 200 and their potential interconnections or communication paths, such as along one or more busses. As illustrated, the computing system 200 may include various hardware components such as, but not limited to, one or more processors 202, one or more busses 204, memory 206, input devices 208, a power source 210, a network interface 212, a user interface 214, and/or other computer components useful in performing the functions described herein.

The one or more processors 202 may include one or more microprocessors capable of performing instructions stored in the memory 206. Additionally or alternatively, the one or more processors 202 may include application-specific integrated circuits (ASICs), field-programmable gate arrays (FPGAs), and/or other devices designed to perform some or all of the functions discussed herein without calling instructions from the memory 206.

With respect to other components, the one or more busses 204 include suitable electrical channels to provide data and/or power between the various components of the computing system 200. The memory 206 may include any tangible, non-transitory, and computer-readable storage media. Although shown as a single block in FIG. 1, the memory 206 can be implemented using multiple physical units of the same or different types in one or more physical locations. The input devices 208 correspond to structures to input data and/or commands to the one or more processors 202. For example, the input devices 208 may include a mouse, touchpad, touchscreen, keyboard and the like. The power source 210 can be any suitable source of power for the various components of the computing device 200, such as line power and/or a battery source. The network interface 212 includes one or more transceivers capable of communicating with other devices over one or more networks (e.g., a communication channel). The network interface 212 may provide a wired network interface or a wireless network interface. A user interface 214 may include a display that is configured to display text or images transferred to it from the one or more processors 202. In addition and/or alternative to the display, the user interface 214 may include other devices for interfacing with a user, such as lights (e.g., LEDs), speakers, and the like.

With the preceding in mind, FIG. 4 is a block diagram illustrating an embodiment in which a virtual server 300 supports and enables the client instance 102, according to one or more disclosed embodiments. More specifically, FIG. 4 illustrates an example of a portion of a service provider cloud infrastructure, including the cloud-based platform 16 discussed above. The cloud-based platform 16 is connected to a client device 20D via the network 14 to provide a user interface to network applications executing within the client instance 102 (e.g., via a web browser of the client device 20D). Client instance 102 is supported by virtual servers 26 similar to those explained with respect to FIG. 2 and is illustrated here to show support for the disclosed functionality described herein within the client instance 102. Cloud provider infrastructures are generally configured to support a plurality of end-user devices, such as client device 20D, concurrently, wherein each end-user device is in communication with the single client instance 102. Also, cloud provider infrastructures may be configured to support any number of client instances, such as client instance 102, concurrently, with each of the instances in communication with one or more end-user devices. As mentioned above, an end-user may also interface with client instance 102 using an application that is executed within a web browser.

With the preceding in mind, certain examples of functions or services that may be performed in furtherance of supporting a customer's use of a client instance 102 are described below. In a first example, an organization may request renaming of a client instance used by the organization (e.g., a uniform resource locator (URL) used by the organization to address and access their respective instance), such as in response to an acquisition or corporate name change which would lead to references to the prior name being improper.

In conventional approaches, the steps for renaming a client instance required a commitment of additional capacity that, once completed would not be needed. In particular, conventionally a new instance for the customer would be fully provisioned, such as with a new database and a pair of new application nodes corresponding to the new name, which would involve the commitment of all resources needed to support new application nodes and a new database. Information would then be copied over to from the instance associated with the old name to the new instance associated with the new name. During this process, the client instance might be off-line (i.e., unavailable) for days at a time. Once completed, the customer would be pointed to the new instance (i.e., new application nodes and database) and the old instance would be taken off-line or removed.

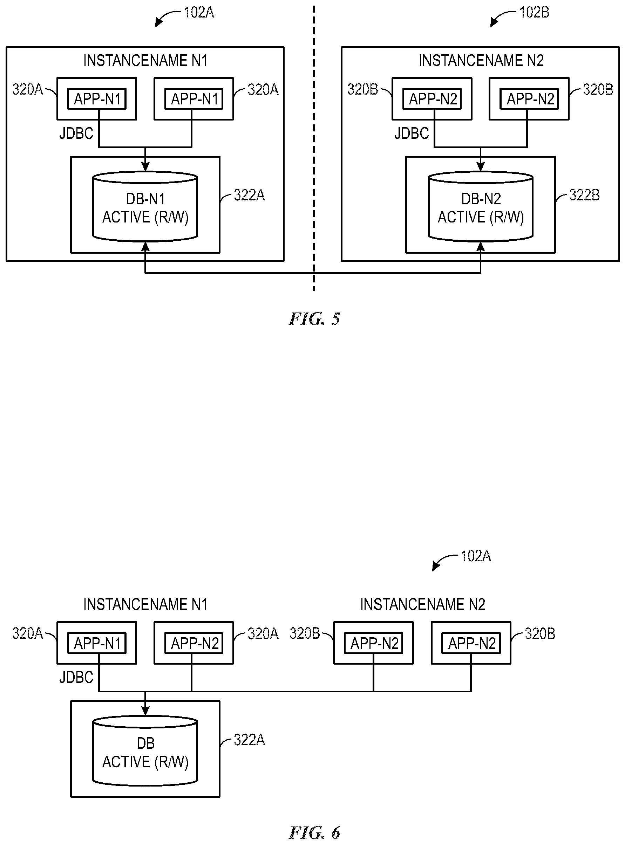

This process is illustrated in FIG. 5, in which an original client instance 102A and a renamed client instance 102B are illustrated. As shown in this example, each instance 102 is fully and separately provisioned with a pair of application nodes 320 and database 322 which the application nodes 320 address. The instance differs, however, with respect to the associated URL by which they are addressed. To migrate from the original client instance 102A to renamed client instance 102B, the data from the database 322A of the original client instance 102A is migrated to the database 322B of the renamed client instance 102B. This may involve having the respective instances 102 off-line as this procedure is carried out. Once the data migration is completed, the renamed client instance 102B may be brought on-line and the original client instance 102A may be retired. As may be appreciated, this process is resource-intensive as a second full instance must be provisioned and both instances maintained during the migration and impacts the organizations ability to use the client instance since due to the period in which both instances are off-line for data migration.

With this in mind, and turning to FIG. 6, a present approach reduces the resources utilized in renaming an instance to be accessible by a new URL. In particular, in this implementation a second full instance is not provisioned. Instead, new application nodes 320B utilizing the new URL are brought on-line, but a second full database is not, thus sparing the substantial resources and time that would typically be associated with provisioning a second database and migrating data to the new database.

Instead, new application nodes 320B are created that point to the original database 322. The database 322 is renamed to correspond to the new URL so that the new application nodes 320B properly reference and interact with the renamed database. As may be appreciated, the database 322 may include multiple tables, a database catalog, and/or configuration parameters that need to be adjusted or changed to be referenced or to reference using a new URL. In practice, renaming or otherwise addressing every occurrence of the original URL in the database 322 may involve a numerous structure query language (SQL) commands or queries. This may be difficult to implement in practice in that any changes in a SQL command or instruction may have to be propagated or addressed in the referencing instructions or syntax. In one embodiment, this issue may be addressed by combining or wrapping the multiple needed SQL commands in a single logical wrapper. For example, when renaming a database 322 to correspond to a new URL, ensuring that all other occurrences of the original URL within the database 322 are replaced with references to the new URL, may be achieved via the following two SQL commands:

```
        snow rename <db-port> --new-id= <new name>
        snow mysql rename-db <port> --src SRC_DB_NAME - dst
        DST_DB_NAME
```

This enables an SQL service to be renamed, whilst also ensuring that a SQL database catalog in the SQL service is also renamed correctly.

For example, an SQL service on port 3400 may be renamed to from "foobar1" to "foobar2", where "foobar1" corresponds to the old URL and "foobar2" corresponds to the new URL, by calling the wrapper command:

```
        snow rename 3400 - new-id=foobar2
```

and SQL database catalog(s) within the SQL service may also be adjusted by calling, for example:

```
        snow mysql-rename-db 3400 -src foobar1_1 -dst
        foobar2_1
```

where "foobar1_1" represents a SQL database catalog in "foobar1", and when the SQL service is renamed to "foobar2" the name of the SQL database catalog is also updated to "foobar2 _1 ". This ensures that any database catalogs within the SQL service are correctly named, and that the changes are fully propagated throughout the renamed database. It will be appreciated that a wrapper may contain more than the two commands provided above, and that other commands and/or queries may be provided within the same wrapper to undertake further functions.

Once defined, the wrapper can be addressed or implemented as a single command, even though it contains or implements multiple SQL commands or queries wrapped or bundled together as a logical unit. In this example, changes to SQL commands or syntax may be made within the queries or commands within the wrapper without having to make additional changes to the commands or queries that call or reference the wrapper. Continuing the example above, if an SQL service on port 3400 was to be renamed from "foobar2" to "foobar3", then the commands need only be changed to:

```
        snow rename 3400 - new-id=foobar3
        snow mysql-rename-db 3400 -src foobar2_1 -dst
        foobar3 _1
```

As such,, the multiple commands or queries involved in renaming the database 322 can be bundled and handled as a single command when a renaming operation needs to be undertaken since any needed changes can be made within the bundle without affecting the ability to call the SQL commands or queries in their bundled form.

In practice, the SQL command or query bundling may be handled as a command line tool that, in response to input arguments, runs a set of SQL commands and/or file processing commands to provide database renaming or other services. In the example of a database renaming operation as described herein, the bundled commands may include, but are not limited to, commands that: (1) rename SQL service related folders and configuration files; (2) create a new database with the new name; (3) execute a SQL "rename table" command to move all tables into the new database; and (4) remove the database with the old or original name. As noted above, in practice these commands may be bundled or wrapped so as to be logically implemented as a single command, allowing changes to be made to commands within the bundle as needed without having to alter or modify the commands or instructions that reference the bundle.

In the context of the present renaming approach, and as shown in FIG. 6, both the old and new URL may continue to work for some defined time (e.g., a week). For example, both the old and new URL may point to the renamed database so that use of either URL provides access to the renamed database. This can be achieved by setting a Canonical Name Record (CNAME record) in the Domain Name System (DNS) which enables both the old URL and the new URL to access the renamed database. Furthermore, a device 20 on the client network 12 may be arranged to schedule a job to remove the CNAME record associated with the old URL from the DNS after a given time period (e.g., a week). Before the scheduled job is executed both the old URL and new URL are active and point to the renamed database. After the scheduled job has been executed, only the new URL will be active.

With respect to other functions or services that may be performed in furtherance of supporting a customer's use of a client instance 102, in a further example it may beneficial at times to migrate a customer from one load balancer to another, such as due to the load balancer becoming overloaded in view of the number of instances supported and/or in view of the change in traffic over time. Each load balancer may have an associated virtual internet protocol (VIP) address utilized by the customer in addressing the load balancer to access their instance(s). Hence, such a migration is effectively moving a customer from one load balancer to another while retaining the same VIP to allow the customer to continue accessing their instances. It may be appreciated that, though a load balancer is used by way of example so as to provide a real-world context, in practice this instance accessing aspect may be generalized as an application delivery service, and may include a number of features in addition to or instead of the described server load balancing functionality, such as but not limited to firewall and virtual private network (VPN) functionality.

With the preceding in mind, it may on occasion be useful to move the client instances of one or more customers to a new load balancer, such as due to overloading of a given load balancer. Typically there is "one-to-one" mapping between a respective customer and the VIP address employed to reach their client instance, which as noted above, typically corresponds to a VIP address associated with a load balancer which directs the user to their instance. One caveat to this "one-to-one" relationship, however, maybe that a secondary VIP address may also be employed which allows the user to access a standby load balancer in the event of failure or unavailability of the primary. Likewise, a second pair of primary and secondary VIP addresses may be available to point to a geographically different data center in the event of unavailability of the primary data center. This, conceptually, there "is a one-to-one mapping between a customer and a VIP address through which they access their client instance(s), though in practice there may be various secondary and/or fallback VIP addresses allowing access to the client instance(s) in the event of unavailability of the primary load balancer and/or data center.

With respect to each VIP accessed by a user, there may actually be multiple instances accessible on the client platform. That is, there may be a "one-to-one relationship between customer and VIP, but a "many-to-one" relationship between VIP and client instances of a customer. As a result of the above observations, moving a VIP address to a new load balancer may be an involved task, as all client instances accessed through a VIP and the respective configurations of these instances should be moved concurrently. The present approach provides for the automated migration of a VIP address or multiple VIP addresses in an automated manner.

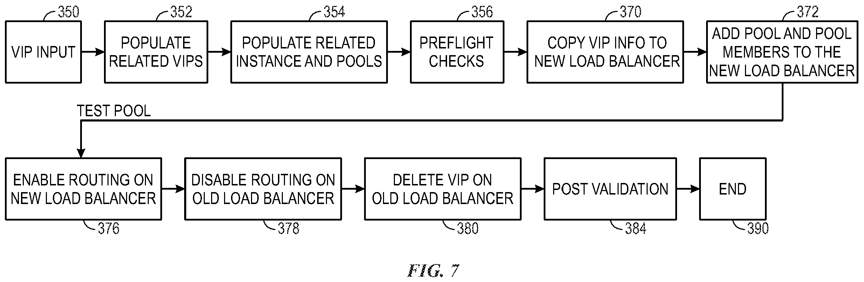

With this in mind, and turning to FIG. 7, an example of steps in one such automated VIP address migration process is illustrated. In this example, one or more VIP addresses to be migrated are provided as inputs (step 350). Provision of the VIP address(es) to be migrated automatically causes certain additional steps to be performed. In this example, the related VIP addresses are automatically added for migration (step 352). By way of example, the input VIP address at step 250 may be a local primary, with related VIP addresses corresponding to a local standby, a remote primary, and a remote standby, which provide redundancy and availability in the event the local primary address and/or the primary data center become unavailable. Thus, at step 352, these additional VIP addresses are identified and packaged for concurrent migration with the local primary VIP address.

At step 354, instances and pools associated with the VIP address(es) are identified to be included in the migration. As used herein, a pool is a collection of application nodes or servers that serve a given instance. In this manner, the instances and applications accessed by a user via the VIP address being migrated are identified as part of the migration.

At step 356 at least one preliminary check may be performed. Such a check may be performed to ensure all identified instances can be migrated concurrently. By way of example, the check may determine whether tasks are running in a client instance and/or otherwise determine whether the target instances are prepared for migration. If not, the automated migration process may be stopped until such time as the instances involved are ready for migration.

Once the preliminary checks have been passed, the VIP address migration may be performed (step 370). In the depicted example, the migration involves copying the VIP address info (e.g., the input VIP address and identified related VIP addresses) to the new load balancer. Pool and pool members are added to the new load balancer (step 372) as well.

Once VIP addresses and information copied to the new load balancer and pools and pool members are added to the new load balancer, routing is enabled on the new load balancer (step 376) and disabled on the old load balancer (step 378). Once routing is disabled on the old load balancer with respect to the migrated VIP addresses, the VIP address(es) may be deleted (step 380) on the old load balancer. A post-validation (step 384) may be performed to confirm that all respective client instances associated with the migrated VIP address(es) are on-line and that traffic routing is being performed correctly. Once post-validation is passed, the process ends (step 390).

Though FIG. 7 and the preceding discussion present the automated steps described in a serial, sequential manner, it should be understood that certain of the described steps may be performed in parallel where appropriate. Further, certain steps may be performed in an order different than what is shown where appropriate.

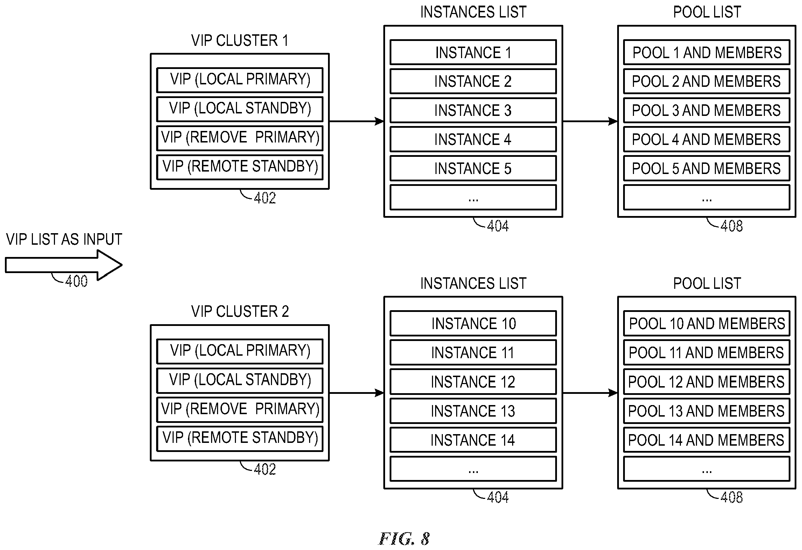

Turning to FIG. 8, certain aspects of the process illustrated in FIG. 7 are illustrated in a graphical form to better illustrate the present concepts. In particular, FIG. 8 illustrates aspects related to steps 350, 352, and 354. Further, the example of FIG. 8 illustrates that more than one VIP address may be migrated concurrently in an automated manner. With this in mind, a list 400 of VIP addresses to be migrated is provided as an input (step 350 of FIG. 7). For each VIP address input, the related VIP addresses are identified (denoted as VIP clusters 402). The client instances associated with each VIP address to be migrated are also identified (client lists 404) and for each instance, the associated application nodes are identified as well (pool lists 408).

The specific embodiments described above have been shown by way of example, and it should be understood that these embodiments may be susceptible to various modifications and alternative forms.

The techniques presented and claimed herein are referenced and applied to material objects and concrete examples of a practical nature that demonstrably improve the present technical field and, as such, are not abstract, intangible or purely theoretical.

## Claims

1. A system, comprising:
a data center (18) comprising one or more resources; and
one or more client instances (102) hosted on the one or more resources, wherein the one or more client instances (102) are accessible by a remote client network (12), and in response to a request to rename a specified client instance (102) to a new name the system is configured to:
rename a database of the specified client instance (102) to the new name; and create a plurality of new application nodes (320A, 320B) addressed by the new name,
wherein the new application nodes (320A, 320B) point to the database of the specified client instance (102).

2. The system of claim 1, wherein the new name is a new uniform resource locator, URL, by which the specified client instance (102) is accessed.

3. The system of claim 2, wherein renaming the database comprises renaming modifying or updating one or more of tables, a database catalog, or configuration parameters of the database to be referenced by or to reference using the new URL.

4. The system of any preceding claim, wherein renaming the database comprises executing a plurality of structured query language, SQL, commands or queries bundled as a single logical executable package, and/or wherein a new client instance (102) is not created and provisioned as part of renaming the specified client instance (102).

5. The system of any preceding claim, wherein in response to a request to migrate from a first load balancer used to access the one or more client instances (102) to a second load balancer, the system is configured to:
identify one or more related virtual internet protocol, VIP, addresses that are associated with a primary VIP address, wherein the related VIP addresses and the primary VIP address are used to access one or more respective client instances (102);
identify the one or more respective client instances (102) and one or more pools of application nodes (320A, 320B) associated with the one or more client instances (102);
copy the related VIP addresses and the primary VIP address to the second load balancer;
add the one or more pools of application nodes (320A, 320B) to the second load balancer;
enable routing to the second load balancer; disable routing to the first load balancer; and
delete the related VIP addresses and the primary VIP address from the first load balancer.

6. A non-transitory machine-readable storage medium storing executable instructions that, when executed by a processor (202), cause operations to be performed comprising:
in response to a request to rename a specified client instance (102) to a new name: renaming a database of the specified client instance (102) to the new name; and creating a plurality of new application nodes (320A, 320B) addressed by the new name,
wherein the new application nodes (320A, 320B) point to the database of the specified client instance (102).

7. The non-transitory machine-readable storage medium of claim 6, wherein the new name is a new uniform resource locator, URL, by which the specified client instance (102) is accessed.

8. The non-transitory machine-readable storage medium of claim 7, wherein renaming the database comprises renaming modifying or updating one or more of tables, a database catalog, or configuration parameters of the database to be referenced by or to reference using the new URL.

9. The non-transitory machine-readable storage medium of any of claims 6 to 8, wherein renaming the database comprises executing a plurality of structured query language, SQL, commands or queries bundled as a single logical executable package, and/or wherein a new client instance (102) is not created and provisioned as part of renaming the specified client instance (102).

10. The non-transitory machine-readable storage medium of any of claims 6 to 9, wherein the instructions, when executed by a processor (202), cause operations to be performed comprising:
in response to a request to migrate from a first load balancer used to access one or more client instances (102) to a second load balancer:
identifying one or more related virtual internet protocol, VIP, addresses that are associated with a primary VIP address, wherein the related VIP addresses and the primary VIP address are used to access one or more respective client instances (102);
identifying the one or more respective client instances (102) and one or more pools of application nodes (320A, 320B) associated with the one or more client instances (102);
copying the related VIP addresses and the primary VIP address to the second load balancer;
adding the one or more pools of application nodes (320A, 320B) to the second load balancer;
enabling routing to the second load balancer; disabling routing to the first load balancer; and
deleting the related VIP addresses and the primary VIP address from the first load balancer.

11. A method for renaming client instances (102), the method comprising:
in response to a request to a request to rename a specified client instance (102) to a new name:
renaming a database of the specified client instance (102) to the new name; and creating a plurality of new application nodes (320A, 320B) addressed by the new name,
wherein the new application nodes (320A, 320B) point to the database of the specified client instance (102).

12. The method of claim 11, wherein the new name is a new uniform resource locator, URL, by which the specified client instance (102) is accessed.

13. The method of claim 11, wherein renaming the database comprises renaming modifying or updating one or more of tables, a database catalog, or configuration parameters of the database to be referenced by or to reference using the new URL.

14. The method of any of claims 11 to 13, wherein renaming the database comprises executing a plurality of structured query language, SQL, commands or queries bundled as a single logical executable package, and/or wherein a new client instance (102) is not created and provisioned as part of renaming the specified client instance (102).

15. The method of any of claims 11 to 14, further comprising, in response to a request to migrate from a first load balancer used to access the one or more client instances (102) to a second load balancer, identifying one or more related virtual internet protocol, VIP, addresses that are associated with a primary VIP address, wherein the related VIP addresses and the primary VIP address are used to access one or more respective client instances (102);
identifying the one or more respective client instances (102) and one or more pools of application nodes (320A, 320B) associated with the one or more client instances;
copying the related VIP addresses and the primary VIP address to the second load balancer;
adding the one or more pools of application nodes (320A, 320B) to the second load balancer;
enabling routing to the second load balancer;
disabling routing to the first load balancer; and
deleting the related VIP addresses and the primary VIP address from the first load balancer.

## Patentansprüche

1. System, umfassend:
ein Rechenzentrum (18), umfassend eine oder mehrere Ressourcen; und
eine oder mehrere Client-Instanzen (102), die auf der einen oder den mehreren Ressourcen gehostet sind, wobei die eine oder die mehreren Client-Instanzen (102) durch ein entferntes Client-Netzwerk (12) zugänglich sind und als Reaktion auf eine Anforderung, eine spezifizierte Client-Instanz (102) zu einem neuen Namen umzubenennen, das System konfiguriert ist zum:
Umbenennen einer Datenbank der spezifizierten Client-Instanz (102) zu dem neuen Namen;
und Erstellen einer Vielzahl von neuen Anwendungsknoten (320A, 320B), die durch den neuen Namen adressiert sind,
wobei die neuen Anwendungsknoten (320A, 320B) auf die Datenbank der spezifizierten Client-Instanz (102) zeigen.

2. System nach Anspruch 1, wobei der neue Name ein neuer Uniform Resource Locator, URL, ist, durch den auf die spezifizierte Client-Instanz (102) zugegriffen wird.

3. System nach Anspruch 2, wobei das Umbenennen der Datenbank das Umbenennen Modifizieren oder Aktualisieren eines oder mehrere von Tabellen, einem Datenbankkatalog oder Konfigurationsparametern der Datenbank umfasst, die durch den neuen URL referenziert werden sollen oder unter Verwendung dessen referenziert werden.

4. System nach einem der vorstehenden Ansprüche, wobei das Umbenennen der Datenbank ein Ausführen einer Vielzahl von Structured-Query-Language-Befehlen oder -Abfragen, SQL-Befehlen oder -Abfragen, die als ein einzelnes logisches ausführbares Paket gebündelt sind, umfasst und/oder wobei eine neue Client-Instanz (102) nicht als Teil des Umbenennens der spezifizierten Client-Instanz (102) erstellt und bereitgestellt wird.

5. System nach einem der vorstehenden Ansprüche, wobei als Reaktion auf eine Anforderung, von einem ersten Lastausgleicher, der zum Zugreifen auf die eine oder die mehreren Client-Instanzen (102) verwendet wird, zu einem zweiten Lastausgleicher zu migrieren, das System konfiguriert ist zum:
Identifizieren einer oder mehrerer verwandter Adressen eines virtuellen Internetprotokolls, VIP-Adressen, die einer primären VIP-Adresse zugeordnet sind, wobei die verwandten VIP-Adressen und die primäre VIP-Adresse verwendet werden, um auf eine oder mehrere jeweilige Client-Instanzen (102) zuzugreifen;
Identifizieren der einen oder der mehreren jeweiligen Client-Instanzen (102) und eines oder mehrerer Pools von Anwendungsknoten (320A, 320B), die der einen oder den mehreren Client-Instanzen (102) zugeordnet sind;
Kopieren der verwandten VIP-Adressen und der primären VIP-Adresse in den zweiten Lastausgleicher;
Hinzufügen des einen oder der mehreren Pools von Anwendungsknoten (320A, 320B) zu dem zweiten Lastausgleicher;
Aktivieren einer Weiterleitung zu dem zweiten Lastausgleicher; Deaktivieren einer Weiterleitung zu dem ersten Lastausgleicher; und
Löschen der zugehörigen VIP-Adressen und der primären VIP-Adresse von dem ersten Lastausgleicher.

6. Nichttransitorisches maschinenlesbares Speichermedium, das ausführbare Anweisungen speichert, die, wenn sie durch einen Prozessor (202) ausgeführt werden, bewirken, dass Vorgänge durchgeführt werden, umfassend:
als Reaktion auf eine Anforderung, eine spezifizierte Client-Instanz (102) zu einem neuen Namen umzubenennen: Umbenennen einer Datenbank der spezifizierten Client-Instanz (102) zu dem neuen Namen; und Erstellen einer Vielzahl von neuen Anwendungsknoten (320A, 320B), die durch den neuen Namen adressiert sind,
wobei die neuen Anwendungsknoten (320A, 320B) auf die Datenbank der spezifizierten Client-Instanz (102) zeigen.

7. Nichttransitorisches maschinenlesbares Speichermedium nach Anspruch 6, wobei der neue Name ein neuer Uniform Resource Locator, URL, ist, durch den auf die spezifizierte Client-Instanz (102) zugegriffen wird.

8. Nichttransitorisches maschinenlesbares Speichermedium nach Anspruch 7, wobei das Umbenennen der Datenbank ein Umbenennen Modifizieren oder Aktualisieren einer oder mehrerer Tabellen, eines Datenbankkatalogs oder von Konfigurationsparametern der Datenbank umfasst, die durch den neuen URL oder unter Verwendung dessen referenziert werden sollen.

9. Nichttransitorisches maschinenlesbares Speichermedium nach einem der Ansprüche 6 bis 8, wobei das Umbenennen der Datenbank ein Ausführen einer Vielzahl von Structured Query Language-Befehlen oder -Abfragen, SQL-Befehlen oder -Abfragen, die als ein einzelnes logisches ausführbares Paket gebündelt sind, umfasst und/oder wobei eine neue Client-Instanz (102) nicht als Teil des Umbenennens der spezifizierten Client-Instanz (102) erstellt und bereitgestellt wird.

10. Nichttransitorisches maschinenlesbares Speichermedium nach einem der Ansprüche 6 bis 9, wobei die Anweisungen, wenn sie durch einen Prozessor (202) ausgeführt werden, bewirken, dass Vorgänge durchgeführt werden, umfassend:
als Reaktion auf eine Anforderung, von einem ersten Lastausgleicher, der zum Zugreifen auf eine oder mehrere Client-Instanzen (102) verwendet wird, zu einem zweiten Lastausgleicher zu migrieren:
Identifizieren einer oder mehrerer verwandter Adressen eines virtuellen Internetprotokolls, VIP-Adressen, die einer primären VIP-Adresse zugeordnet sind, wobei die verwandten VIP-Adressen und die primäre VIP-Adresse verwendet werden, um auf eine oder mehrere jeweilige Client-Instanzen (102) zuzugreifen;
Identifizieren der einen oder der mehreren jeweiligen Client-Instanzen (102) und eines oder mehrerer Pools von Anwendungsknoten (320A, 320B), die der einen oder den mehreren Client-Instanzen (102) zugeordnet sind;
Kopieren der verwandten VIP-Adressen und der primären VIP-Adresse in den zweiten Lastausgleicher;
Hinzufügen des einen oder der mehreren Pools von Anwendungsknoten (320A, 320B) zu dem zweiten Lastausgleicher;
Aktivieren der Weiterleitung zu dem zweiten Lastausgleicher; Deaktivieren der Weiterleitung zu dem ersten Lastausgleicher; und
Löschen der zugehörigen VIP-Adressen und der primären VIP-Adresse von dem ersten Lastausgleicher.

11. Verfahren zum Umbenennen von Client-Instanzen (102), das Verfahren umfassend:
als Reaktion auf eine Anforderung auf eine Anforderung, eine spezifizierte Client-Instanz (102) zu einem neuen Namen umzubenennen:
Umbenennen einer Datenbank der spezifizierten Client-Instanz (102) zu dem neuen Namen; und Erstellen einer Vielzahl von neuen Anwendungsknoten (320A, 320B), die durch den neuen Namen adressiert sind,
wobei die neuen Anwendungsknoten (320A, 320B) auf die Datenbank der spezifizierten Client-Instanz (102) zeigen.

12. Verfahren nach Anspruch 11, wobei der neue Name ein neuer Uniform Resource Locator, URL, ist, durch den auf die spezifizierte Client-Instanz (102) zugegriffen wird.

13. Verfahren nach Anspruch 11, wobei das Umbenennen der Datenbank das Umbenennen Modifizieren oder Aktualisieren einer oder mehrerer Tabellen, eines Datenbankkatalogs oder von Konfigurationsparametern der Datenbank umfasst, die durch den neuen URL oder unter Verwendung dessen referenziert werden sollen.

14. Verfahren nach einem der Ansprüche 11 bis 13, wobei das Umbenennen der Datenbank das Ausführen einer Vielzahl von Structured Query Language-Befehlen oder -Abfragen, SQL-Befehlen oder -Abfragen, die als ein einzelnes logisches ausführbares Paket gebündelt sind, umfasst und/oder wobei eine neue Client-Instanz (102) nicht als Teil des Umbenennens der spezifizierten Client-Instanz (102) erstellt und bereitgestellt wird.

15. Verfahren nach einem der Ansprüche 11 bis 14, ferner umfassend, als Reaktion auf eine Anforderung, von einem ersten Lastausgleicher, der zum Zugreifen auf die eine oder die mehreren Client-Instanzen (102) verwendet wird, zu einem zweiten Lastausgleicher zu migrieren, Identifizieren eines oder mehrerer verwandter Adressen eines virtuellen Internetprotokolls, VIP-Adressen, die einer primären VIP-Adresse zugeordnet sind, wobei die verwandten VIP-Adressen und die primäre VIP-Adresse verwendet werden, um auf eine oder mehrere jeweilige Client-Instanzen (102) zuzugreifen;
Identifizieren der einen oder der mehreren jeweiligen Client-Instanzen (102) und eines oder mehrerer Pools von Anwendungsknoten (320A, 320B), die der einen oder den mehreren Client-Instanzen zugeordnet sind;
Kopieren der verwandten VIP-Adressen und der primären VIP-Adresse in den zweiten Lastausgleicher;
Hinzufügen des einen oder der mehreren Pools von Anwendungsknoten (320A, 320B) zu dem zweiten Lastausgleicher;
Aktivieren der Weiterleitung zu dem zweiten Lastausgleicher;
Deaktivieren der Weiterleitung zu dem ersten Lastausgleicher; und
Löschen der zugehörigen VIP-Adressen und der primären VIP-Adresse von dem ersten Lastausgleicher.

## Revendications

1. Système, comprenant :
un centre de données (18) comprenant une ou plusieurs ressources ; et
une ou plusieurs instances client (102) hébergées sur les une ou plusieurs ressources, dans lequel les une ou plusieurs instances client (102) sont accessibles par un réseau client distant (12), et en réponse à une demande de renommer une instance client précisée (102) selon un nouveau nom le système est configuré pour :
renommer une base de données de l'instance client précisée (102) selon le nouveau nom ;
et créer une pluralité de nouveaux noeuds d'application (320A, 320B) adressés par le nouveau nom,
dans lequel les nouveaux noeuds d'application (320A, 320B) indiquent la base de données de l'instance client précisée (102).

2. Système selon la revendication 1, dans lequel le nouveau nom est un nouveau localisateur uniforme de ressources, URL, par lequel l'instance client précisée (102) est accessible.

3. Système selon la revendication 2, dans lequel le renommage de la base de données comprend le renommage, la modification ou la mise à jour d'un ou plusieurs tableaux, d'un catalogue de base de données, ou de paramètres de configuration de la base de données qui doit être référencée par ou à référencer à l'aide de la nouvelle URL.

4. Système selon l'une quelconque revendication précédente, dans lequel le renommage de la base de données comprend l'exécution d'une pluralité de commandes ou requêtes en langage d'interrogation structurée, SQL, regroupées en guise de paquet exécutable logique unique, et/ou dans lequel une nouvelle instance client (102) n'est pas créée ni fournie dans le cadre du renommage de l'instance client précisée (102).

5. Système selon l'une quelconque revendication précédente, dans lequel en réponse à une demande pour migrer d'un premier équilibreur de charge utilisé pour accéder aux une ou plusieurs instances client (102) vers un second équilibreur de charge, le système est configuré pour :
identifier une ou plusieurs adresses de protocole Internet virtuel, VIP, qui sont associées à une adresse VIP primaire, dans lequel les adresses VIP apparentées et l'adresse VIP primaire sont utilisées pour accéder à une ou plusieurs instances client respectives (102) ;
identifier les une ou plusieurs instances client respectives (102) et un ou plusieurs groupements de noeuds d'application (320A, 320B) associés aux une ou plusieurs instances client (102) ;
copier les adresses VIP apparentées et l'adresse VIP primaire dans le second équilibreur de charge ;
ajouter les un ou plusieurs groupements de noeuds d'application (320A, 320B) au second équilibreur de charge ;
activer le routage vers le second équilibreur de charge ; désactiver le routage vers le premier équilibreur de charge ; et
supprimer les adresses VIP apparentées et l'adresse VIP primaire du premier équilibreur de charge.

6. Support de stockage non transitoire lisible par machine stockant des instructions exécutables qui, lorsqu'elles sont exécutées par un processeur (202), amènent des opérations à s'effectuer comprenant :
en réponse à une demande de renommer une instance client précisée (102) sous un nouveau nom : le renommage d'une base de données de l'instance client précisée (102) sous le nouveau nom ; et la création d'une pluralité de nouveaux noeuds d'application (320A, 320B) adressés par le nouveau nom,
dans lequel les nouveaux noeuds d'application (320A, 320B) indiquent la base de données de l'instance client précisée (102).

7. Support de stockage non transitoire lisible par machine selon la revendication 6, dans lequel le nouveau nom est un nouveau localisateur uniforme de ressources, URL, par lequel l'instance client précisée (102) est accessible.

8. Support de stockage non transitoire lisible par machine selon la revendication 7, dans lequel le renommage de la base de données comprend le renommage, la modification ou la mise à jour d'un ou plusieurs tableaux, d'un catalogue de base de données, ou de paramètres de configuration de la base de données qui doit être référencée par ou à référencer à l'aide de la nouvelle URL.

9. Support de stockage lisible non transitoire par machine selon l'une quelconque des revendications 6 à 8, dans lequel le renommage de la base de données comprend l'exécution d'une pluralité de commandes ou requêtes en langage d'interrogation structurée, SQL, regroupées en guise de paquet exécutable logique unique, et/ou dans lequel une nouvelle instance client (102) n'est pas créée ni fournie dans le cadre du renommage de l'instance client précisée (102).

10. Support de stockage non transitoire lisible par machine selon l'une quelconque des revendications 6 à 9, dans lequel les instructions, lorsqu'elles sont exécutées par un processeur (202), amènent des opérations à s'effectuer comprenant :
en réponse à une demande pour migrer d'un premier équilibreur de charge utilisé pour accéder à une ou plusieurs instances client (102) vers un second équilibreur de charge :
l'identification d'une ou plusieurs adresses de protocole Internet virtuel, VIP, qui sont associées à une adresse VIP primaire, dans lequel les adresses VIP apparentées et l'adresse VIP primaire sont utilisées pour accéder à une ou plusieurs instances client respectives (102) ;
l'identification des une ou plusieurs instances client respectives (102) et un ou plusieurs groupements de noeuds d'application (320A, 320B) associés aux une ou plusieurs instances client (102) ;
la copie des adresses VIP apparentées et l'adresse VIP primaire vers le second équilibreur de charge ;
l'ajout des un ou plusieurs groupements de noeuds d'application (320A, 320B) au second équilibreur de charge ;
l'activation du routage vers le second équilibreur de charge ; la désactivation du routage vers le premier équilibreur de charge ; et
la suppression des adresses VIP apparentées et de l'adresse VIP primaire du premier équilibreur de charge.

11. Procédé de renommage d'instances client (102), le procédé comprenant :
en réponse à une demande à une demande pour renommer une instance client précisée (102) selon un nouveau nom :
le renommage d'une base de données de l'instance client précisée (102) selon le nouveau nom ; et la création d'une pluralité de nouveaux noeuds d'application (320A, 320B) adressés par le nouveau nom,
dans lequel les nouveaux noeuds d'application (320A, 320B) indiquent la base de données de l'instance client précisée (102).

12. Procédé selon la revendication 11, dans lequel le nouveau nom est un nouveau localisateur uniforme de ressources, URL, par lequel l'instance client précisée (102) est accessible.

13. Procédé selon la revendication 11, dans lequel le renommage de la base de données comprend le renommage, la modification ou la mise à jour d'un ou plusieurs tableaux, d'un catalogue de base de données, ou de paramètres de configuration de la base de données à référencer par ou à référencer à l'aide de la nouvelle URL.

14. Procédé selon l'une quelconque des revendications 11 à 13, dans lequel le renommage de la base de données comprend l'exécution d'une pluralité de commandes ou de requêtes en langage d'interrogation structurée, SQL, regroupées en guise de paquet exécutable logique unique, et/ou dans lequel une nouvelle instance client (102) n'est pas créée ni fournie dans le cadre du renommage de l'instance client précisée (102).

15. Procédé selon l'une quelconque des revendications 11 à 14, comprenant en outre, en réponse à une demande pour migrer d'un premier équilibreur de charge utilisé pour accéder aux une ou plusieurs instances client (102) vers un second équilibreur de charge, l'identification d'une ou plusieurs adresses de protocole Internet virtuel, VIP, qui sont associées à une adresse VIP primaire, dans lequel les adresses VIP apparentées et l'adresse VIP primaire sont utilisées pour accéder à une ou plusieurs instances client respectives (102) ;
l'identification des une ou plusieurs instances client respectives (102) et un ou plusieurs groupements de noeuds d'application (320A, 320B) associés aux une ou plusieurs instances client ;
la copie des adresses VIP apparentées et l'adresse VIP primaire vers le second équilibreur de charge ;
l'ajout des un ou plusieurs groupements de noeuds d'application (320A, 320B) au second équilibreur de charge ;
l'activation du routage vers le second équilibreur de charge ;
la désactivation du routage vers le premier équilibreur de charge ; et
la suppression des adresses VIP apparentées et de l'adresse VIP primaire du premier équilibreur de charge.
